# EUROPÄISCHE PATENTANMELDUNG

(11) **EP 2 365 289 A2**
(43) Veröffentlichungstag der Anmeldung: **14.09.2011**
(21) Anmeldenummer: 11157473.7
(22) Anmeldetag: 09.03.2011
(51) Int. Cl.: G01D 5/00

(54) **Drucksensor, Ventilbaugruppe und Verfahren zu deren Betrieb**

(30) Priorität: 09.03.2010 DE 102010002710; 06.05.2010 DE 102010028708
(71) Anmelder: Alfmeier Präzision AG Baugruppen und Systemlösungen, 91757 Treuchtlingen (DE)
(72) Erfinder: Herbst, Manfred, 90431, Nürnberg (DE); Schwarz, Markus, 91757, Treuchtlingen (DE); Stephan, Markus, 91728, Gnotzheim (DE); Tirlet, Jean-Francois, 60880, Armancourt (FR)
(74) Vertreter: Mörtel & Höfner

(57) **Zusammenfassung**

Ein Drucksensor (10) umfasst einen einen Druckaufnehmer (12), der ein in Korrelation mit einem aufzunehmenden Druck (p) stehendes elektrisches Drucksignal (28) erzeugt, und eine Verarbeitungseinheit (23), die anhand einer Abbildungsvorschrift (35) aus dem Drucksignal (28) ein elektrisches Ausgangssignal (S) erzeugt.

Eine Ventilbaugruppe (2) enthält einen, einen Druck (p) in deren Innenraum (11) erfassenden und als Drucksignal (S) ausgebenden Drucksensor (10).

Bei einem Verfahren zum Betreiben eines Drucksensors (10) erzeugt ein Druckaufnehmer (12) ein in Korrelation mit einem aufzunehmenden Druck (p) stehendes elektrisches Drucksignal (28) und eine Verarbeitungseinheit (23) erzeugt anhand einer Abbildungsvorschrift (35) aus dem Drucksignal (28) ein elektrisches Ausgangssignal (S).

## Beschreibung

Die Erfindung betrifft einen Drucksensor für ein Kraftfahrzeug, eine einen solchen Drucksensor enthaltende Ventilbaugruppe und ein Verfahren zum Betrieb eines derartigen Drucksensors oder einer derartigen Ventilbaugruppe.

In heutigen Kraftfahrzeugen sind in der Regel etliche Drucksensoren verbaut. Diese nehmen einen zu messenden Druck auf und geben ein den aufgenommenen bzw. gemessenen Druck in Form eines elektrischen Signals aus und leiten dieses an weiterverarbeitende Fahrzeugkomponenten weiter. Drucksensoren sind auch in Ventilbaugruppen verbaut. Z.B. sind zwischen einem Unterdruckspeicher und einer Unterdruckquelle eines Bremskraftunterstützungssystems Rückschlagventile als Ventilbaugruppen verbaut, welche einen integrierten Drucksensor, hier in Form eines Unterdrucksensors, aufweisen. Das Rückschlagventil verhindert bei abgeschalteter Unterdruckquelle einen Unterdruckverlust, d.h. ein Einströmen von Luft in den Speicher. In anderen Ausführungsformen sind die Drucksensoren nicht in der Ventilbaugruppe integriert, sondern als sogenannte "stand-alone"-, also Einzelbauteile am oder kombiniert in einem Unterdruckspeicher vorgesehen.

Bekannt sind heute Drucksensoren, welche ein mit dem gemessenen Druck korreliertes analoges Ausgangssignal, z.B. eine elektrische Spannung im Bereich zwischen 0V und 5V liefern. Andere übliche Spannungsbereiche sind z.B. 0V bis 12V, 03V bis 3,3V, 0V bis 42V usw. Eigentlich handelt es sich hier um reine Druckaufnehmer. Das elektrische Signal ist also ein elektrisches Drucksignal, das vom Druckaufnehmer unmittelbar erzeugt wird. Das Drucksignal wird dann z.B. zu einer im Kraftfahrzeug vorhandenen zentralen Steuereinheit geführt und dort ausgewertet. Der Zusammenhang zwischen Druck und Drucksignal ist alleine durch den Druckaufnehmer bestimmt und hängt z.B. von Temperatureinflüssen ab. Anhand der Höhe der vom Drucksensor bzw. -aufnehmer gelieferten Spannung wird z.B. im Kraftfahrzeug eine elektrische Schaltfunktion ausgelöst. Beispielsweise entscheidet die zentrale Steuereinheit, welche Maßnahmen ergriffen werden müssen, um einen gemessenen, zu niedrigen Unterdruck wieder auszugleichen. Für das oben genannte Beispiel eines Bremskraftverstärkers in einem Hybridfahrzeug wird z.B. dann zur Erzeugung bzw. Nachverstärkung eines Unterdruckes im Unterdruckspeicher der Verbrennungsmotor des Fahrzeuges oder eine elektrische Zusatzpumpe als Unterdruckquellen gestartet.

Alternativ sind Drucksensoren bekannt, welche als mechanische Schaltsysteme ausgebildet sind. Diese erzeugen in Abhängigkeit eines aufzunehmenden Drucks ein binäres elektrisches Ausgangssignal, z.B. mit den Werten 0V ("0"-Signal) oder 5V ("1"-Signal) und werden daher auch Druckschalter genannt. Diese enthalten in der Regel als Druckaufnehmer eine Feder und eine Membran. Der Druckaufnehmer betätigt ein elektrisches Schaltelement, z.B. einen Schnappschalter. Die Membran ist also federgestützt, vom zu messenden Druck belastet und bewegt sich je nach anliegendem Druck- bzw. Unterdruck. Bei Über- oder Unterschreiten eines bestimmten Druckes betätigt sie den Schnappschalter, welcher dann ein elektrisches, in der Regel binäres Signal, z.B. ein 0V- ("0"-Signal) oder 5V- bzw. 12V-Signal ("1"-Signal) liefert. Das erzeugte elektrische Signal wird wieder, wie oben, zur weiteren Auswertung an eine zentrale Steuereinheit übermittelt.

Denkbar ist für Drucksensoren, insbesondere die o.g. Druckschalter, auch, das entstehende elektrische Signal direkt auf einen elektrischen Verbraucher, z.B. eine Unterdruckpumpe, ein Elektromagnetventil oder ähnliches zu führen. Mit anderen Worten wirkt dann der Drucksensor selbst als druckbetätigtes Schaltelement unmittelbar auf das angeschlossene Bauteil.

Die genannten elektromechanischen Drucksensoren unterliegen physikalischen Grenzen: Z.B beim o.g. binären Drucksensorschalter ist durch die Platzierung des Schnappschalters zur Membran in der Regel zwar einer der Schaltpunkte frei wählbar bzw. in hinreichender Weise auf einen bestimmten Grenzdruck einstellbar. Z.B. kann also der Übergang von einem "1"- zu einem "0"-Signal bei einem bestimmten Druck erfolgen. Der zweite Schaltpunkt bzw. -druck, also der Übergang vom "0"- zum "1"-Signal ergibt sich jedoch dann zwingend systemintern, z.B. durch die mechanischen Dimensionen des Schnappschalters oder die elastischen Eigenschaften der Membran und der Druckfeder und kann daher nicht mehr frei gewählt werden. Mit anderen Worten können also die Hystereseeigenschaften des Drucksensors - insbesondere im Falle der o.g. Druckschalter - nicht in einfacher Weise frei gewählt werden, diese sind allenfalls in Grenzen durch aufwändige Konstruktionsentwürfe zu beeinflussen.

Weiterhin benötigen die bekannten Drucksensoren große Toleranzfenster bezüglich ihrer Dimensionierung der Schaltpunkte bzw. der zu überwachenden Drücke, da sich Schaltpunkte bzw. Kennlinien zwischen Druck und Ausgangssignal unter Temperatureinfluss verändern. Z.B. ist die oben genannte Membran ein Elastomer, dessen das Ausgangssignal bestimmende Eigenschaften sich in einem Temperaturbereich zwischen -20°C und +100°C deutlich verändern. Entsprechende Systeme sind außerdem in der Regel nicht diagnosefähig, mit anderen Worten können die Drucksensoren kein Diagnosesignal erzeugen bzw. senden, ob sie noch einwandfrei arbeiten oder nicht.

Versuche, z.B. die oben genannten Schaltpunkte besser einzustellen oder eine Diagnosefähigkeit in bestehende Drucksensoren zu integrieren, sind in der Regel unmöglich, sehr aufwendig oder bedeuten einen unter Umständen hohen Produktionsausschuss.

Aufgabe der Erfindung ist es, einen verbesserten Drucksensor, eine verbesserte Ventilbaugruppe und ein verbessertes Verfahren zu deren Betrieb anzugeben.

Hinsichtlich des Drucksensors wird die Aufgabe gelöst durch einen Drucksensor gemäß Patentanspruch 1. Der Drucksensor enthält einen Druckaufnehmer. Dieser erzeugt aus einem aufzunehmenden Druck ein in Korrelation zu diesem stehendes elektrisches analoges oder digitales Drucksignal. Der Drucksensor enthält außerdem eine Verarbeitungseinheit. Diese erzeugt aus dem Drucksignal anhand einer Abbildungsvorschrift ein elektrisches Ausgangssignal.

Mit anderen Worten findet innerhalb des Drucksensors bereits eine, in der Regel elektronische, Vorverarbeitung des vom Druckaufnehmer erzeugten elektrischen Signals, also des Drucksignals statt. Somit findet eine Entkopplung des Ausgangssignals von den die Eigenschaften des Drucksignals bestimmenden, systeminhärenten Eigenschaften des Druckaufnehmers statt. Je nach Ausgestaltung der Abbildungseigenschaft kann das Drucksignal nahezu beliebig auf das Ausgangssignal abgebildet werden.

Die Erfindung beruht auf der Erkenntnis, dass bisherige Drucksensoren stets den eigentlichen Druckaufnehmer enthalten, der ein vom Druck abhängiges elektrisches Signal erzeugt und dieses Signal direkt vom Drucksensor ausgegeben wird. Die Erfindung beruht nun auf der grundlegenden Idee, das vom Druckaufnehmer erzeugte elektrische Signal nicht mehr direkt, also ungefiltert auszugeben, also z.B. an die oben genannte zentrale Kraftfahrzeugsteuerung oder den entsprechenden Verbraucher weiterzugeben. Das vom Druckaufnehmer erzeugte Druck-oder Sensorsignal soll erfindungsgemäß bereits vor Ort durch die Verarbeitungseinheit, also innerhalb des Drucksensors, elektronisch mit Hilfe der Abbildungsvorschrift vorverarbeitet werden. Die Verarbeitungseinheit ist z.B. eine Auswerteschaltung. Erst das vorverarbeitete Signal, d.h. das Ausgangssignal der Auswerteschaltung wird dann vom Drucksensor, z.B. an die zentrale Steuereinheit oder den Verbraucher weitergegeben.

Gemäß einer vorteilhaften Ausführungsform ist die Verarbeitungseinheit ein Mikrocontroller. Ein im Mikrocontroller ablaufendes Programm bewerkstelligt dann zumindest teilweise die Abbildungsvorschrift. Eine zusätzliche Realisierung der Abbildungsvorschrift wird z.B. über die Kennlinien nichtlinearer Bauelemente bzw. Teilschaltungen realisiert, die dem Druckaufnehmer nachgeschaltet sind. Alternativ ist die Verarbeitungseinheit eine diskrete Schaltung. Die Abbildungsvorschrift ist dann durch deren Dimensionierung realisiert.

Im Drucksensor befindet sich dann also, z.B. auf einer Platine, ein Druckaufnehmer, welcher als Ausgangssignal eine dem Druck proportionale analoge Ausgangsspannung - das Drucksignal - liefert. Diese Ausgangsspannung wird mittels eines Analog/Digital-Wandlers mit einer entsprechend hohen Bitauflösung, von z.B. 10bit in ein digitales Signal gewandelt. Dieses digitale Signal wird mittels eines Mikrocontrollers und einer auf dem Mikrocontroller installierten Software - als Verarbeitungseinheit - weiterverarbeitet, also verändert, und das veränderte Signal als Ausgangssignal, digital oder analog rückgewandelt, vom Drucksensor ausgegeben. Hierbei kann der A/D- oder D/A-Wandler auch direkt im Mikrocontroller integriert sein, mit anderen Worten wird dann z.B. das analoge Ausgangssignal des Drucksensors direkt auf einen Analogeingang des Mikrocontrollers geführt.

In einer weiteren bevorzugten Ausführungsform ist die Abbildungsvorschrift veränderbar. Z.B. ist der Mikrocontroller programmierbar bzw. mit verschiedenen Programmen ladbar, die verschiedene Abbildungsvorschriften darstellen.

Denkbar ist somit z.B. eine Kennlinienanpassung eines aktuell gewählten Druckaufnehmers im Drucksensor, so dass das - z.B. kontinuierliche, also analoge - Ausgangssignal verschiedener Drucksensoren trotz verschiedener interner Druckaufnehmer gleich ist.

In einer weiteren Ausführungsform ist das Ausgangssignal ein mindestens zwei Schaltzustände annehmendes, vom Druck abhängiges Logiksignal. Denkbar sind auch mehr Schaltzustände des Signals, die dann z.B. in einem einzigen Ausgangssignal kodiert sein können. Im Mikrocontroller entscheidet dann z.B. die entsprechende Software, ob am Ausgang des Mikrocontrollers ein logisches "1"- oder "0"-Signal erzeugt wird. Mit anderen Worten untersucht dieser das Drucksignal auf die Einhaltung von im Mikrocontroller programmieren Schaltschwellen. Der Wechsel zwischen den Schaltzuständen des Ausgangssignals erfolgt also an einem jeweiligen Schaltpunkt.

In einer vorteilhaften Ausführungsform enthält der Drucksensor einen Schaltpunkt. Dieser bestimmt einen Wechsel zwischen zwei Schaltzuständen im Ausgangssignal und ist veränderbar. Mit anderen Worten ist damit das Druckniveau, bei dem der Drucksensor schaltet, also den Wert des Ausgangssignals wechselt, einstellbar. Durch die Verarbeitung des vom Druckaufnehmer gelieferten Drucksignals im Mikrocontroller können z.B. entsprechende Druckschaltschwellen des Drucksensors frei wählbar, z.B. im Mikrocontroller programmierbar, ausgeführt werden.

In einer vorteilhaften Ausführungsform enthält der Drucksensor einen ersten, auf ein Steigen des Druckes reagierenden, und einen zweiten, auf ein Fallen des Druckes reagierenden Schaltpunkt. Hierdurch ist eine Hysterese-Eigenschaft des Drucksensors frei programmierbar bzw. bestimmbar. Die Schaltschwellen und somit auch die Hystereseeigenschaften des Drucksensors sind einfach und frei, z.B. durch Umprogrammierung des Mikrocontrollers, veränderbar.

In einer vorteilhaften Ausführungsform enthält der Drucksensor eine Verarbeitungseinheit mit mehreren Ausgängen für verschiedene, also zwei oder mehr Ausgangssignale. Jedes Ausgangssignal für sich kann dann nahezu beliebig beschaffen sein, z.B. können ein analoges und verschiedene binäre Ausganssignale erzeugt werden.

Z.B. liegen dann an mehreren Ausgängen des Drucksensors jeweils eigene, in der Regel unterschiedliche Signal an. Auszugebende Signale beruhen alle auf dem selben Sensorsignal, also Drucksignal, sind aber in der Regel verschiedenartig innerhalb des Drucksensors vorverarbeitet. Beispielsweise sind innerhalb des Drucksensors verschiedene Druckschwellen bzw. Druckniveaus im Mikrocontroller programmiert. Je nach Über- oder Unterschreiten verschiedener Druckniveaus werden unterschiedliche Ausgänge des Drucksensors aktiviert oder deaktiviert.

Sind die Ausgänge z.B. jeweils solche, die direkt Verbraucher ansteuern können, so können mehrere Verbraucher von einem einzigen Drucksensor über je einen von dessen Ausgängen angesteuert werden. Z.B überwacht der Druckaufnehmer ein Speicherunterdruckniveau, z.B. das eines Bremskraftverstärkers in einem Fahrzeug. Abhängig vom jeweiligen Druck können so mit Hilfe des Drucksensors verschiedene Verbraucher bzw. Aggregate, wie z.B. Klimaanlage, elektrische Zusatzpumpen usw. direkt zu- oder abgeschaltet werden, um differenziert auf das aktuelle Unterdruckniveau zu reagieren.

In einer bevorzugten Ausführungsform enthält der Drucksensor einen das Ausgangssignal verstärkenden Leistungstreiber. Hierdurch kann die o.g. direkte Ansteuerung eines Verbrauchers mit einem leistungsstarken Ausgangssignal erfolgen. Das Ausgangssignal kann dann nicht nur zur Fahrzeugelektronik bzw. über diesen Umweg, sondern auch zu einem direkt anzusteuernden Verbraucher durchgeschaltet werden. Das vom Sensor gelieferte Ausgangssignal wird. Der Drucksensor ist damit z.B. wie ein bisheriger üblicher, druckbetätigter Schalter bzw. Drucksensor oder Druckschalter verwendbar. Beispielsweise kann dann durch Zwischenschaltung des Drucksensors zwischen die Bordspannung und eine Unterdruckpumpe diese direkt ohne weitere Zwischenschaltung von Kfz-Elektronik, eines Relais oder ähnlichem betrieben werden.

In einer weiteren Ausführungsform enthält der Drucksensor eine Korrektureinheit, die eine die Korrelation zwischen dem Druck und dem Drucksignal beeinflussende Störgröße erfasst und außerdem das Ausgangssignal abhängig von der Störgröße hinsichtlich der Störgröße korrigiert. Die Korrektureinheit wirkt hierbei z.B. auf das Drucksignal, das Ausgangssignal oder die dazwischenliegende Verarbeitungseinheit ein.

Durch den Einsatz einer derartigen Beschaltung des eigentlichen Druckaufnehmers im Drucksensor können z.B. auf den Drucksensor wirkende Temperatureinflüsse mit der Temperatur als Störgröße reduziert werden. Durch eine geeignete Verarbeitung im Mikrocontroller wird dann z.B. durch Temperaturmessung eine Messwertkorrektur des gemessenen Druckes durchgeführt und so Temperatureinflüsse im Drucksensor kompensiert. Der Mikrocontroller kann so auch komplexe Korrekturen am Drucksignal durchführen, z.B. eine Temperaturkompensation per Kennlinie.

In einer weiteren Ausführungsform enthält der Drucksensor ein Diagnosemodul, das die Funktion des Drucksensors überwacht und ein Fehlersignal ausgibt. Diese steht dann z.B. an einem separaten Diagnoseausgang zu Verfügung. Die Diagnoseinformation kann aber auch im erzeugten Ausgangssignal enthalten sein. Das Diagnosemodul kann z.B. im Mikrocontroller - als Programm - integriert sein. Erzeugt der Mikrocontroller beispielsweise Ausgangsspannungen zwischen 0V und 5V, so erzeugt er im fehlerfreien Betrieb eine Spannung von stets minimal 0,5V und maximal 4,5V. Die beiden Bereiche zwischen 0V und 0,5V bzw. 4,5V und 5V werden im fehlerfreien Fall des Drucksensors nicht benutzt. Diagnostiziert der Mikrocontroller dagegen einen Fehler, z.B. einen Ausfall des Druckaufnehmers, nutzt er die ansonsten nicht genutzten Spannungsbereiche und gibt z.B. Signale von 0V bis 0,3V oder 4,7V bis 5V aus. Eine weiterverarbeitende Steuerung erkennt die Spannungsveränderungen und ergreift weitere Maßnahmen, gibt z.B. eine Warnmeldung aus. So können Fehler im Drucksensor detektiert werden, z.B. ein Ausfall des Drucksensors, eine zu hohe Umgebungstemperatur, ein Einbruch der Versorgungsspannung oder ähnliches.

Im erfindungsgemäßen Drucksensor sind in einer weiteren Ausführungsform zusätzliche Komponenten vorhanden, um diesen an die Gegebenheiten zum Einsatz in Kraftfahrzeugen, z.B. raue Umgebungsbedingungen, anzupassen. Hier sind lediglich beispielhaft zu nennen ein Verpolschutz, ein Überspannungsschutz, ein Kurzschlussschutz, Maßnahmen zur EMV etc.

In einer weiteren Ausführungsform der Erfindung kann der Drucksensor durch Wahl einer geeigneten Software im Mikrocontroller als Absolutdrucksensor oder als Differenzdrucksensor ausgeführt werden. Ein Absolutdrucksensor misst stets den absolut am Drucksensor anliegenden Druck. Ein Differenzdrucksensor misst einen Druck, der z.B. auf den außerhalb des Kraftfahrzeugs augenblicklich herrschenden Atmosphärendruck bezogen ist.

Der erfindungsgemäße Drucksensor kann mit jedem beliebigen Druckaufnehmer ausgerüstet werden. In einer weiteren bevorzugten Ausführungsform der Erfindung wird als Druckaufnehmer im Drucksensor ein solcher verwendet, welcher ein digitales, z.B. ein 10bit-Signal, anstelle eines analogen Ausgangssignals liefert. Eine wie oben besprochene A/D-Wandlung kann dann eingespart werden. Mit anderen Worten wird ein komplexer Druckaufnehmer verwendet, welcher an sich bereits eine Basisintelligenz, z.B. in Form eines einfachen Mikrocontrollers enthält.

In einer weiteren vorteilhaften Ausführungsform ist der gesamte Drucksensor vollständig integriert. So wird ein Drucksensor geschaffen, welcher zumindest die wesentlichen Komponenten (Mikrocontroller, installierte Software, Zusatzbeschaltungen etc.) oder auch die gesamte o.g. Auswerteelektronik auf einem einzigen Substrat integriert. So entsteht ein in sich programmierbarer, z.B. fehlertoleranter und diagnosefähiger Drucksensor, an welchem schließlich das Schaltsignal in gewöhnlicher Weise abgegriffen bzw. an sonstige Bauteile im Kraftfahrzeug weitergeleitet werden kann.

In einer weiteren vorteilhaften Ausführungsform der Erfindung ist der Drucksensor so ausgestaltet, dass er mit einer für das Fahrzeug generisch erforderlichen Spannung, z.B. 5 V, 12 V oder 42 V, also z.B. bei entsprechender Bordnetzspannung arbeitet. Die Spannungsumschaltung im Sensor kann auch konfigurierbar bzw. im Mikrocontroller programmierbar sein. Hierzu ist z.B. ein Festspannungsregler im Drucksensor zu integrieren, um einen beispielsweise für sich auf 5V-Basis arbeitenden Druckaufnehmer an ein Spannungsarbeitsniveau von 12V oder 42V anzupassen. Anstelle der Integration kann jedoch aus wärmetechnischen Gründen auch ein externer Festspannungsregler verwendet werden. Am Drucksensor bleibt dann lediglich eine entsprechende Zuleitung für die Spannungsversorgung vorzusehen.

In einer weiteren Ausführungsform der Erfindung ist der Sensor hinsichtlich seines Hardwareaufbaus derart flexibel gestaltet, dass für den jeweiligen Anwendungsfall immer die gleiche Hardware eingesetzt wird und sich verschiedene Drucksensoren für verschiedene Anwendungszwecke nur noch durch die im Sensor verwendete Software unterscheiden.

Ein erfindungsgemäßes Drucksensormodul weist in einer weiteren Ausführungsform ein flexibles Gehäusekonzept auf. Der Drucksensor kann so in verschiedensten Baugruppen, z.B. mit ein oder mehreren Rückschlagventilfunktionen integrierbar sein.

In einer weiteren Ausführungsform der Erfindung ist der Drucksensor busfähig. Das erzeugte Ausgangssignal wird vom Drucksensor dann beispielsweise an einem CAN-, SENT- oder LIN-BUS zur Verfügung gestellt.

Hinsichtlich der Ventilbaugruppe wird die Aufgabe gelöst durch eine Ventilbaugruppe gemäß Patentanspruch 11. Diese enthält einen, einen Druck in deren Innenraum erfassenden und als Drucksignal ausgebenden erfindungsgemäßen Drucksensor. Der erfindungsgemäße Drucksensor ist also dann z.B. in ein o.g. Rückschlagventil eingearbeitet. Die o.g. Vorteile des Drucksensors schlagen auf entsprechende Vorteile der Rückschlagventile durch. So werden dann die Signale des Druckaufnehmers innerhalb des Rückschlagventils ausgewertet. Rückschlagventile erhalten ein frei programmierbares Druckschaltverhalten, sind temperaturkompensiert, erhalten Diagnosefähigkeit oder können im Austausch zu herkömmlichen Ventilen eingesetzt werden. Sie können analoge oder digitale Ausgangssignale liefern, sind für verschiedene Bordspannungen konfigurierbar und können in einem flexiblen Gehäusekonzept für Rückschlagventile eingesetzt werden.

Hinsichtlich des Verfahrens wird die Aufgabe gelöst durch ein Verfahren zum Betreiben eines erfindungsgemäßen Drucksensors gemäß Patentanspruch 12. Der Druckaufnehmer erzeugt ein in Korrelation mit einem aufzunehmenden Druck stehendes elektrisches Drucksignal. Eine Verarbeitungseinheit erzeugt anhand einer Abbildungsvorschrift aus dem Drucksignal ein elektrisches Ausgangssignal.

Das Verfahren sowie dessen vorteilhafte Weiterbildungen und deren Vorteile wurden bereits oben erläutert.

Für eine weitere Beschreibung der Erfindung wird auf die Ausführungsbeispiele der Zeichnungen verwiesen. Es zeigen, jeweils in einer schematischen Prinzipskizze:
Fig.1 ein Rückschlagventil mit erfindungsgemäßem Drucksensor,
Fig.2 den Drucksensor aus Fig.1 in a) Draufsicht und b) Ansicht von unten,
Fig.3 ein Blockschaltbild des Drucksensors aus Fig.1,
Fig.4 eine Kennlinie des Drucksensors aus Fig.1,
Fig.5 alternative Rückschlagventile mit erfindungsgemäßen Drucksensoren.

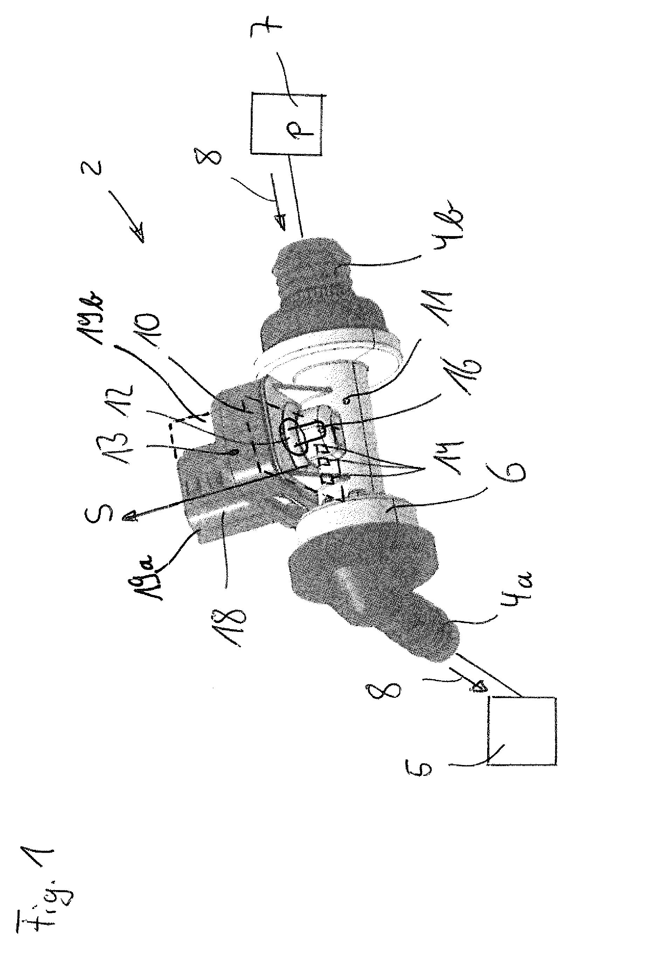

Fig. 1 zeigt eine Ventilbaugruppe 2, kurz auch "Rückschlagventil" genannt, die in einem nicht dargestellten Kraftfahrzeug verbaut werden kann. Im eingebauten Zustand führt - in Fig.1 nur skizziert - ein erster Anschlussstutzen 4a der Ventilbaugruppe 2 zu einer Unterdruckquelle 5, z.B. dem Motor des Kraftfahrzeugs oder einer elektrischen Unterdruckpumpe. Ein zweiter Anschlussstutzen 4b führt zu einem Vorratsbehälter 7, z.B. dem Unterdruckreservoir eines Bremskraftverstärkers.

In der Ventilbaugruppe 2 ist außerdem ein eigentliches Rückschlagventil 6 - in Fig.1 ebenfalls nur angedeutet - im Druckweg zwischen den beiden Anschlussstutzen 4a,b integriert. Die Ventilbaugruppe 2 ermöglicht dadurch, dass in Richtung der Pfeile 8 z.B. Luft aus dem Vorratsbehälter 7 zur Unterdruckquelle 5 hin abgesaugt werden kann, mit anderen Worten im Vorratsbehälter 7 ein Unterdruck erzeugt werden kann. Hierbei öffnet das Rückschlagventil 6 und erlaubt einen Druckausgleich bzw. Luftströmung in Richtung der Pfeile 8. Wird die Unterdruckquelle 5 abgeschaltet, schließt das Rückschlagventil 6, so dass der Unterdruck im Vorratsbehälter 7 abgesperrt ist, bzw. entgegen der Pfeile 8 keine Luft in den Vorratsbehälter 7 zurückströmen kann.

Die Ventilbaugruppe 2 enthält außerdem einen in Fig.1 nur angedeuteten Drucksensor 10, welcher druckfühlend mit einem mit den Anschlussstutzen kommunizierenden Innenraum 11 der Ventilbaugruppe 2 verbunden ist. So erfasst der Drucksensor 10 den zwischen Rückschlagventil 6 und Vorratsbehälter 7 und damit auch den im Vorratsbehälter 7 vorhandenen Unterdruck bzw. Druck p. Der Drucksensor 10 erzeugt ein mit dem Druck p korreliertes elektrisches Ausgangssignal S. Der Drucksensor 10 umfasst insbesondere einen Druckaufnehmer 12, welcher gegenüber einem Außenraum 13 der Ventilbaugruppe abgedichtet ist, und über eine Fühleröffnung 16, wie oben beschreiben mit dem Druck p im Innenraum 11 korrespondiert. Der Drucksensor 10 weist außerdem elektrische Kontakte 14 auf, welche den erfassten Druck in Form des Ausgangssignals S über eine Steckverbindung 18 der Ventilbaugruppe 2 ausgegeben. Diese bildet damit einen Ausgang 19a für das Ausgangssignal S. In einer alternativen Ausführungsform werden vom Druckaufnehmer verschiedene Ausgangssignale S erzeugt. Ein anderes Ausgangssignal wird dann an einem zweiten Ausgang 19b ausgegeben. Die Kontakte 14 dienen außerdem z.B. zur elektrischen Energieversorgung des Drucksensors 10.

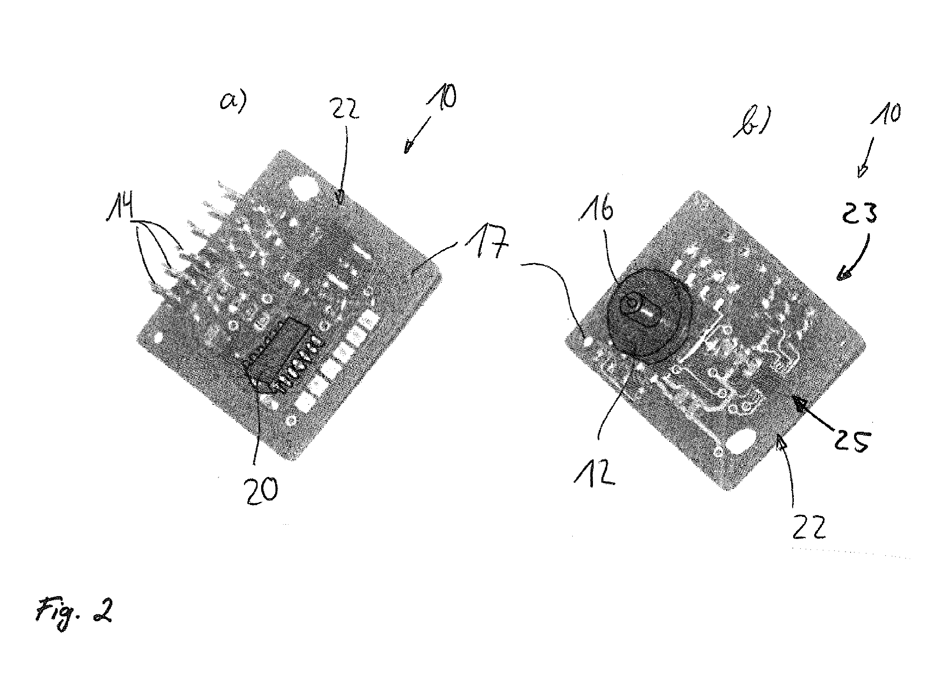

Fig. 2 zeigt den Drucksensor 10 im Detail, aufweisend die folgenden Komponenten: Gezeigt ist eine elektronische Schalt-Platine 17, gemäß Fig. 2a in Ansicht auf deren Oberseite gemäß Fig. 2b auf deren Unterseite. Die Platine 17 ist bestückt mit dem Druckaufnehmer 12 und den elektrischen Kontakten 14. Außerdem ist auf ihr ein Mikrocontroller 20 sowie weitere elektronische Bauelemente 22 angeordnet, die mit den vorab genannten Komponenten verschaltet sind. Die Bauelemente 22 bewerkstelligen z.B. Pegelanpassungen, Temperaturkompensation, EMV-Schutz, Leistungsverstärkung von elektrischen Signalen usw. Die Bauelemente 22 zusammen mit dem Mikrocontroller 20 bilden eine Verarbeitungseinheit 23.

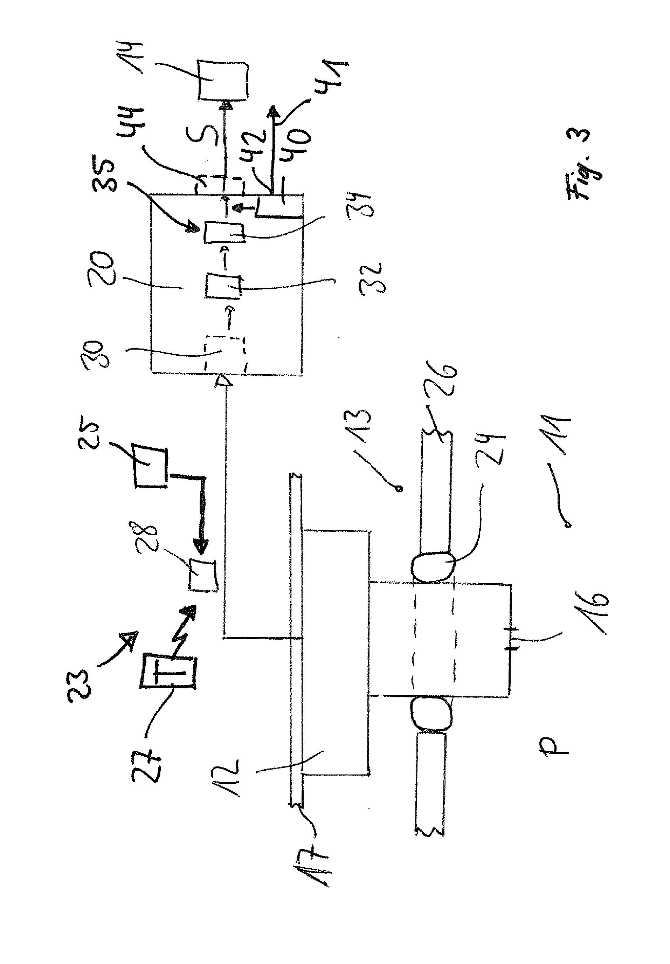

Fig. 3 zeigt ein schematisches Blockschaltbild des Drucksensors 10. Der Druckaufnehmer 12 ist mit Hilfe einer Dichtung 24 so in einer Gehäusewand 26 der Ventilbaugruppe 2 integriert, dass nur dessen Fühleröffnung 16 mit dem Innenraum 11 und damit dem Druck p kommuniziert. Der restliche Druckaufnehmer 12 befindet sich zusammen mit der Platine 17 im Außenraum 13 auf Umgebungsdruckniveau. Der Druckaufnehmer 12 erzeugt ein vom Druck p abhängiges Ausgangssignal, nämlich das elektrische Drucksignal 28, z.B. in Form eines Analogsignals. Dieses wird an den Mikrocontroller 20 übermittelt. In einem A/D-Wandler 30 wird das Drucksignal 28 vom Mikrocontroller 20 in ein digitales bzw. logisches, in der Regel mehrere bit breites Signal 32 gewandelt. In einer alternativen, nicht gezeigten Ausführungsform kann hier stellvertretend auch ein separater, nicht im Mikrocontroller 20 enthaltener A/D-Wandler vorgesehen sein.

Durch ein im Mikrocontroller 20 enthaltenes Programm 34 wird das Drucksignal 28 weiterverarbeitet. Das Programm 34 erzeugt das Ausgangssignal S des Mikrocontrollers 20, um dieses an die Kontakte 14 und von dort zu weiterverarbeitenden, nicht gezeigten Fahrzeugkomponenten zu leiten. Das Programm realisiert zumindest einen Teil einer Abbildungsvorschrift 35, die das Drucksignal 28 auf das elektrische Ausgangssignal S abbildet bzw. dieses aus dem Drucksignal 28 erzeugt. Bewerkstelligt wird die Abbildung bzw. Erzeugung durch die Verarbeitungseinheit 23.

In einer bevorzugten Ausführungsform enthält die Verarbeitungseinheit 23 auch eine Korrektureinheit 25. Diese ist durch einen Teil der Bauelemente 22 realisiert. Die Korrektureinheit erfasst eine Temperatur T im Innenraum 11. Die Temperatur T ist eine Störgröße 27, die den Zusammenhang zwischen Druck p und Drucksignal 28 beeinflusst. Die Korrektureinheit korrigiert daher das Drucksignal 28 abhängig von der Temperatur T, damit gleiche Drücke p immer gleichen Werten des Drucksignals 28 entsprechen. Die Korrektureinheit 27 bewirkt hierbei einen Teil der Abbildungsvorschrift 35.

Beide Signale sind damit in der Regel verschieden. Insbesondere sogar dann, wenn beide Signale analog ausgeführt sind, bilden diese also unterschiedliche Kennlinien bezüglich Druck p und Wert des Ausgangssignals S.

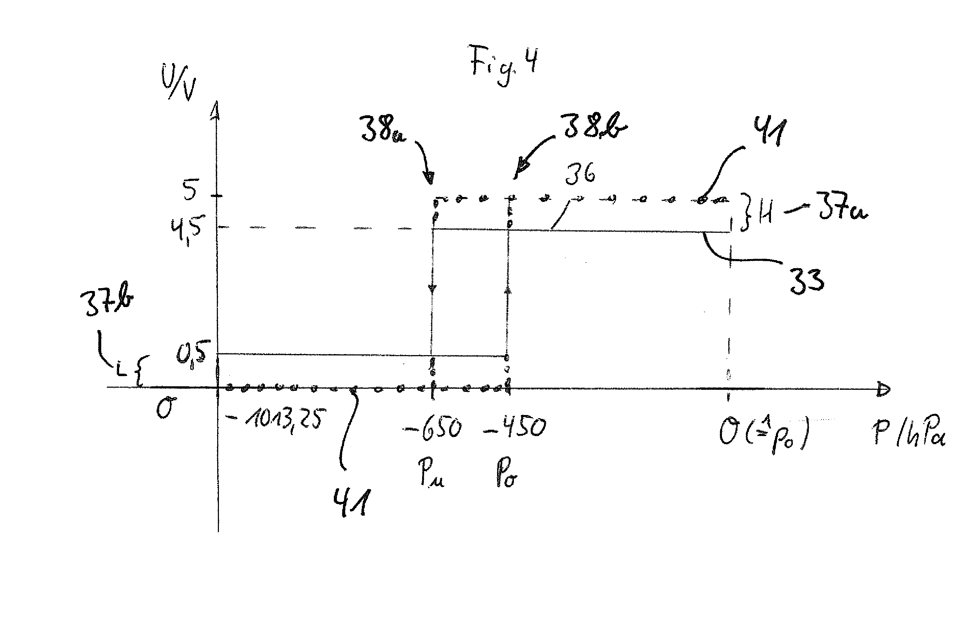

Fig. 4 zeigt eine vom Programm 34 realisierte Kennlinie bzw. Abbildungsvorschrift 35: Gemäß dieser wird das Drucksignal 28 bzw. das logische Signal 32 in das Ausgangssignal S überführt bzw. abgebildet. Zunächst erzeugt also der Druckaufnehmer 12 das Drucksignal 28. Dieses wird durch den A/D-Wandler 30 lediglich digitalisiert. Das Signal 32 ist daher lediglich der durch den Druckaufnehmer 12 aufgenommene und in einen Zahlenwert umgesetzte Druck p, welcher als Differenzdruck zum jeweiligen Umgebungsdruck p₀ normiert ist. Das Ausgangssignal S wird durch eine Spannung im Bereich zwischen 0V und 5V dargestellt und soll jeweils anzeigen, ob der aktuelle Druck p über (H-Pegel) oder unter (L-Pegel) einem Grenzdruck liegt. Das Ausgangssignal ist daher ein Logiksignal 33, das mindestens zwei Schaltzustände 37a,b, nämlich die Pegel L und H annehmen kann.

Das Programm 34 realisiert eine Kennlinie 36 derart, dass zwischen einem Differenzdruck von 0hPa und -650hPa ein logischer H-Pegel von 4,5V als Ausgangssignal S erzeugt wird. Sinkt der Druck p unter einen unteren Grenzdruck pᵤ von - 650hPa, wechselt das Signal S auf den logischen L-Pegel von 0,5V. Der Grenzdruck pᵤ bildet also einen ersten, einem fallenden Druck p zugeordneten Schaltpunkt 38a für das Ausganssignal S. In einer nicht dargestellten Ausführungsform springt das Ausgangssignal S dann bei Überschreiten des selben Grenzdruckes pᵤ wieder zurück auf den H-Pegel.

In der gezeigten Ausführungsform beinhaltet die im Mikrocontroller 20 programmierte Kennlinie 36 jedoch außerdem eine Hysteresefunktion. Bei einem Wiederansteigen des Druckes p steigt erst ab einem oberen Grenzdruck pₒ von -450hPa der L-Pegel im Ausgangssignal S wieder auf einen H-Pegel an. Dieser Grenzdruck bildet damit einen zweiten, vom ersten 38a verschiedenen Schaltpunkt 38b. Die jeweiligen unteren bzw. oberen Grenzdrücke pᵤ, pₒ sind hierbei unabhängig voneinander durch Änderungen von Parametern im Programm 34 außerdem veränderbar, also programmierbar.

Fig. 4 zeigt außerdem, dass durch die Kennlinie 36 eine Diagnosefähigkeit im Drucksensor 10 integriert ist. Hierzu ist im Drucksensor 10 ein Diagnosemodul 40 (s. Fig. 3) integriert, hier in Form eines Zusatzprogramms im Mikrocontroller 20. Stellt das Diagnosemodul 40 eine Unregelmäßigkeit im Drucksensor 10 fest, gibt der Drucksensor 10 als logische Pegel H bzw. L die in Fig. 4 gepunktet dargestellten Werte von 5V oder 0V im Ausgangssignal S aus. Diese bilden damit ein Fehlersignal 41 bzw. kodieren dieses in das Ausgangssignal S.

Eine Unregelmäßigkeit ist z.B. einen Ausfallverdacht des Druckaufnehmers 12 oder die Überschreitung einer Grenztemperatur auf der Platine 17. Aus der Abweichung zu den regulären Werten der Pegel H und L von 4,5V und 0,5V im regulären Betrieb schließt eine das Signal S empfangende nicht gezeigte Steuerung im Kraftfahrzeug auf einen Fehler im Drucksensor 10. Die Fehlerinformation ist also in den entsprechenden H- und L-Pegeln bzw. im Ausgangssignal S integriert. Alternativ kann der Drucksensor jedoch auch über einen separaten Ausgang 42 verfügen, an dem dann z.B. ein logisches Fehlersignal 41 ausgegeben wird.

In alternativen, nicht dargestellten Ausführungformen gelten in Fig. 4 andere Spannungen, z.B. 0,3V anstelle von 0V und 3V, 12V oder 42V anstelle von 5V. Zusätzlich oder alternaiv verläuft die Kennlinie 36 invers, nimmt also bei -1013,25hPa z.B. einen Wert von 12V, bei 0hPa einen Wert von z.B. 0V an.

Fig. 3 zeigt in einer alternativen Ausführungsform noch einen Leistungstreiber 44, der das Ausgangssignal S verstärkt, um damit auch leistungsbedürftige, nicht dargestellte Verbraucher direkt anzusteuern.

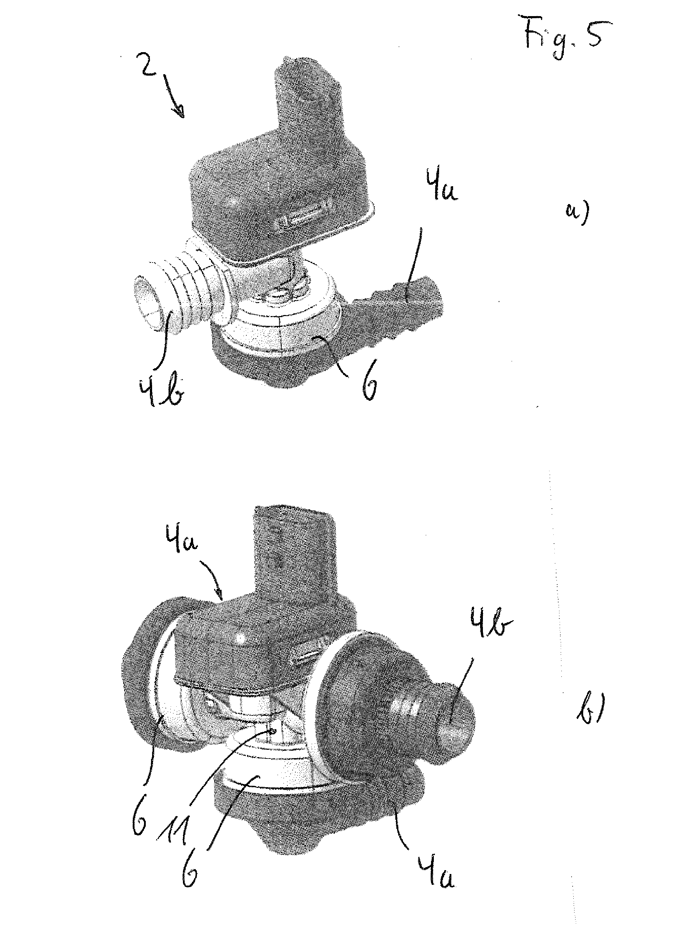

Fig. 5 zeigt weitere Ausführungsformen von Ventilbaugruppen 2, wobei sich diejenige der Fig. 5a lediglich durch die geometrische Ausgestaltung, nicht jedoch durch die Funktionalität von der Ventilbaugruppe 2 aus Fig. 1 unterscheidet. Diese ist also z.B. für andere Bauraumsituationen einsetzbar.

In Fig. 5b weist die entsprechende Ventilbaugruppe 2 jedoch zwei verschiedene Anschlussstutzen 4a für verschiedenartige Unterdruckquellen 5 auf. Jeder Anschlussstutzen 4a verfügt jeweils über ein eigenes Rückschlagventil 6, das zum Innenraum 11 und damit zum Anschlussstutzen 4b führt. Am Anschlussstutzen 4b kann somit wahlweise über einen der beiden Anschlussstutzen 4a bzw. die daran angeschlossene Unterdruckquelle ein Unterdruck erzeugt werden, was z.B. für den Einsatz in Hybridfahrzeugen vorteilhaft ist. Hier sind als Unterdruckquellen einerseits dessen Verbrennungsmotor am einen Anschlussstutzen 4a und andererseits eine elektrische Pumpe am anderen Anschlussstutzen 4a angeschlossen, die wahlweise benutzt werden können.

## Patentansprüche

1. Drucksensor (10),
- mit einem Druckaufnehmer (12), der ein in Korrelation mit einem aufzunehmenden Druck (p) stehendes elektrisches Drucksignal (28) erzeugt,
- und mit einer Verarbeitungseinheit (23), die anhand einer Abbildungsvorschrift (35) aus dem Drucksignal (28) ein elektrisches Ausgangssignal (S) erzeugt.

2. Drucksensor (10) nach Anspruch 1, bei der die Verarbeitungseinheit (35) ein Mikrocontroller (20) ist, der ein die Abbildungsvorschrift (35) zumindest teilweise bewerkstelligendes Programm (34) enthält.

3. Drucksensor (10) nach einem der vorhergehenden Ansprüche, mit einer veränderbaren Abbildungsvorschrift (35).

4. Drucksensor (10) nach einem der vorhergehenden Ansprüche, mit einem Ausgangssignal (S), das ein mindestens zwei Schaltzustände (37a,b) annehmendes, vom Druck (p) abhängiges Logiksignal ist.

5. Drucksensor (10) nach Anspruch 4, mit einem einen Wechsel zwischen zwei Schaltzuständen (37a,b) bestimmenden, veränderbaren Schaltpunkt (38a,b).

6. Drucksensor (10) nach Anspruch 4 oder 5, mit einem ersten (38a), auf ein Steigen des Druckes (p) reagierenden, und einem zweiten, auf ein Fallen des Druckes (p) reagierenden Schaltpunkt (38b).

7. Drucksensor (10) nach einem der vorhergehenden Ansprüche, mit einer Verarbeitungseinheit (23) mit mehreren Ausgängen (19a,b) für verschiedene Ausgangssignale (S).

8. Drucksensor (10) nach einem der vorhergehenden Ansprüche, mit einem das Ausgangssignal (S) verstärkenden Leistungstreiber (44).

9. Drucksensor (10) nach einem der vorhergehenden Ansprüche, mit einer Korrektureinheit (25), die
- eine die Korrelation zwischen dem Druck (p) und dem Signal (28) beeinflussende Störgröße (27) erfasst,
- und das Ausgangssignal (S) abhängig von der Störgröße (27) hinsichtlich der Störgröße (27) korrigiert.

10. Drucksensor (10) nach einem der vorhergehenden Ansprüche, mit einem Diagnosemodul (40), das die Funktion des Drucksensors (10) überwacht und ein Fehlersignal (41) ausgibt.

11. Ventilbaugruppe (2), mit einem einen Druck (p) in deren Innenraum (11) erfassenden und als Drucksignal (S) ausgebenden Drucksensor (10) nach einem der Ansprüche 1 bis 10.

12. Verfahren zum Betreiben eines Drucksensors (10) nach einem der Ansprüche 1 bis 10, bei dem
- ein Druckaufnehmer (12) ein in Korrelation mit einem aufzunehmenden Druck (p) stehendes elektrisches Drucksignal (28) erzeugt,
- und eine Verarbeitungseinheit (23) anhand einer Abbildungsvorschrift (35) aus dem Drucksignal (28) ein elektrisches Ausgangssignal (S) erzeugt.

13. Verfahren nach Anspruch 12, bei dem der Drucksensor (10) als Ausgangssignal (S) ein mindestens zwei Schaltzustände (37a,b) annehmendes, vom Druck (p) abhängiges Logiksignal (33) erzeugt.

14. Verfahren nach Anspruch 12 oder 13, bei dem der Drucksensor (10) an mehreren Ausgängen (19a,b) verschiedene Ausgangssignale (S) erzeugt.

15. Verfahren nach einem der Ansprüche 12 bis 14, bei dem der Drucksensor (10) ein vom Funktionieren des Drucksensors (10) abhängiges Fehlersignal (41) ausgibt.

16. Verfahren nach einem der Ansprüche 12 bis 15, das in einer Ventilbaugruppe (2) gemäß Anspruch 11 ausgeführt wird.
